# EUROPEAN PATENT APPLICATION

(11) **EP 4 428 562 A1**
(43) Date of publication of application: **11.09.2024**
(21) Application number: 24155660.4
(22) Date of filing: 05.02.2024
(51) Int. Cl.: G01S 5/02

(54) **METHOD FOR DETERMINING A POSITION OF A TRANSMITTER, AND SYSTEM**

(30) Priority: 07.03.2023 DE 102023105658
(71) Applicant: Airbus Defence and Space GmbH, 82024 Taufkirchen (DE)
(72) Inventor: FRANKE, Andre, 82024 Taufkirchen (DE); POINTNER, Julia, 82024 Taufkirchen (DE)
(74) Representative: Isarpatent

(57) **Abstract**

The present invention relates to a method for determining a position of a transmitter (200), comprising synchronizing a multiplicity of receivers (110) by forwarding a list of measurement parameters from a central control unit (120) to the multiplicity of receivers (110), wherein the list of measurement parameters contains a multiplicity of measurement time intervals; measuring signals (210) by means of the multiplicity of receivers (110) using the list of measurement parameters; forwarding data relating to the measured signals (210) from the multiplicity of receivers (110) to the central control unit (120), wherein the data relating to the measured signals (210) contain a measurement time and a measurement position of the measured signal (210); and evaluating the forwarded data in order to determine the position of the transmitter (200) by means of the central control unit (120). The present invention further relates to a system (100).

## Description

### TECHNICAL FIELD OF THE INVENTION

The present invention relates to a method for determining a position of a transmitter, and to a system.

### BACKGROUND TO THE INVENTION

In many fields of application, particularly, but not exclusively, in the military field, it is often necessary to determine the position of an object which emits signals, in particular electromagnetic signals. For this purpose, methods or systems are used in which a signal emitted by a transmitter, the position of which is intended to be determined, is measured by a multiplicity of receivers, and the position of the transmitter can be determined on the basis of their respective, known positions and the times at which the emitted signal was measured.

However, these systems have hitherto been developed under the assumption of a cooperative transmitter. In such a case, the time at which the transmitter emits the signal is known, and the receivers can be preset accordingly.

However, particularly in the military field, the position of a non-cooperative transmitter which emits signals at unknown times is often intended to be determined. Since the preparation of the receivers for a measurement requires a certain amount of time, pauses occur in which the position determining system cannot detect any signals. This is not a problem in the case of cooperative transmitters, since such transmitters are synchronized with these measurement pauses, but it can impair the position determination of non-cooperative transmitters.

### SUMMARY OF THE INVENTION

Against this background, the object of the present invention is to improve the reliability of position determinations of objects emitting signals, particularly if said objects do not cooperate.

This object is achieved by a method for determining a position of a transmitter having the features of patent claim 1, and a system having the features of patent claim 9.

A method for determining a position of a transmitter is provided accordingly. A multiplicity of receivers are synchronized by forwarding a list of measurement parameters from a central control unit to the multiplicity of receivers, wherein the list of measurement parameters contains a multiplicity of measurement time intervals. Signals are measured by the multiplicity of receivers using the list of measurement parameters. Data relating to the measured signals are forwarded by the multiplicity of receivers to the central control unit, wherein the data relating to the measured signals contain a measurement time and a measurement position of the measured signal. The forwarded data are evaluated by the central control unit in order to determine the position of the transmitter.

A system is further provided which has a central control unit and a multiplicity of receivers and which is designed to carry out a method according to the invention.

One idea of the present invention lies in the synchronization of a multiplicity of receivers over a lengthy time period and therefore also over a multiplicity of individual measurements. The measurement pauses of conventional systems and methods can thereby be eliminated or at least reduced, thus significantly increasing the reliability of the position determination, particularly in the case of non-cooperative transmitters of which the existence cannot be predetermined with certainty.

According to one exemplary embodiment, the list of measurement parameters further contains a measurement start time, a measurement time interval length and/or a measurement duration. This is a particularly advantageous way of defining the measurement time intervals.

According to one exemplary embodiment, the list of measurement parameters further contains a frequency measurement range. The receivers can thereby be advantageously tuned to the transmitter to be determined.

According to one development, the frequency measurement range is divided into a multiplicity of sub-ranges and one of the multiplicity of sub-ranges is assigned to each of the multiplicity of measurement intervals. The reliability of the position determination can be advantageously increased as a result.

According to one exemplary embodiment, the data relating to the measured signals contain the measured signals and the central control unit determines whether the measured signals originate from the transmitter. The reliability of the position determination can be advantageously increased as a result.

According to one exemplary embodiment, the multiplicity of receivers determine whether the measured signals originate from the transmitter. The bandwidth required for the communication between the receivers and the control unit can be reduced as a result.

According to one development, each of the multiplicity of receivers transmits the data relating to the measured signals only if it has been determined that the measured signals originate from the transmitter. The bandwidth required for the communication between the receivers and the control unit can be further reduced as a result, and communication errors can be avoided.

According to one exemplary embodiment, the positions in each case of a multiplicity of transmitters are determined. This can be advantageous in many applications.

According to one exemplary embodiment, the multiplicity of receivers are designed as stationary and/or mobile. This can be advantageous in many applications.

### BRIEF DESCRIPTION OF THE DRAWINGS

The invention is explained below with reference to the figures in the drawings. In the figures:
- Fig. 1: shows a schematic flow diagram of a method for determining a position of a transmitter according to one exemplary embodiment of the present invention; and
- Fig. 2: shows a schematic representation of a system according to one exemplary embodiment of the present invention.

In the figures, the same reference signs denote identical or functionally identical components, unless otherwise indicated.

### DETAILED DESCRIPTION OF EXEMPLARY EMBODIMENTS OF THE INVENTION

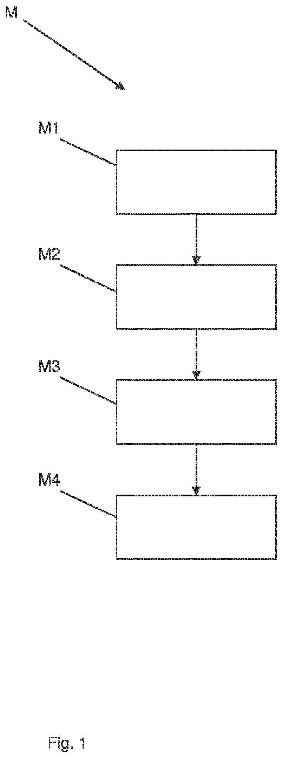

Fig. 1 shows a schematic flow diagram of a method M for determining a position of a transmitter according to one exemplary embodiment of the present invention.

In a first method step M1, a multiplicity of receivers are synchronized by forwarding a list of measurement parameters from a central control unit to the multiplicity of receivers, wherein the list of measurement parameters contains a multiplicity of measurement time intervals. In a further method step M2, the signals are measured by the multiplicity of receivers using the list of measurement parameters. In a further method step M3, data relating to the measured signals are forwarded from the multiplicity of receivers to the central control unit, wherein the data relating to the measured signals contain a measurement time and a measurement position of the measured signal. In a further method step M4, the forwarded data are evaluated by the central control unit in order to determine the position of the transmitter.

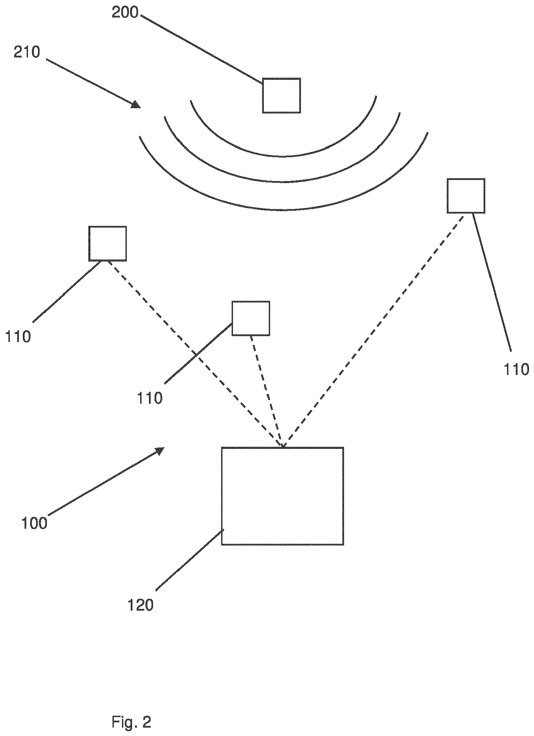

The individual method steps of the method M shown here are explained in detail below with reference to Fig. 2.

Fig. 2 shows a schematic representation of a system 100 according to one exemplary embodiment of the present invention.

The system 100 comprises a multiplicity of receivers 110 of which a total of three are shown in Fig. 2, and also a central control unit 120. A transmitter 200 emits signals 210.

The multiplicity of receivers 110 are connected to the central control unit 120 and can be synchronized by the central control unit 120 by forwarding a list of measurement parameters. This list of measurement parameters contains a multiplicity of measurement time intervals at which the receivers are intended to measure signals. The measurement time intervals are the same for all of the multiplicity of receivers 110 and cover a long time period, whereby the measurements of the multiplicity of receivers 110 take place over this entire time period. In each of the multiplicity of measurement time intervals, each of the multiplicity of receivers 110 carries out a measurement with which it is possible to detect whether a signal 210 emitted by the transmitter 200 has or has not reached the respective receiver 110 in this measurement time interval. Data relating to these measurements, indicating, in particular, whether signals 210 have or have not been measured, or indicating the measurement time interval in which a receiver 110 has measured a signal are forwarded from the receivers 110 to the central control unit 120. The central control unit can determine the position of the transmitter 200 by means of these data and data relating to the positions of the individual receivers 110.

The measurement time intervals can be defined, for example, by means of the measurement start time, measurement time interval length and/or measurement duration contained in the list of parameters.

The measured parameters can further contain a frequency measurement range. The receivers which can generally measure signals and frequencies outside this frequency range can thereby be tuned to the transmitter of which the position is intended to be determined. This frequency range can further be divided into a multiplicity of sub-ranges, wherein one of the multiplicity of sub-ranges is assigned to each of the multiplicity of measurement intervals. As the signals 210 emitted by the transmitter 200 generally have specific frequency characteristics, since the signals can, for example, undergo different frequency shifts due to varying differential speeds between the transmitter 200 and the receiver 110, the measurement of the signals 210 by the individual receivers 110 can be optimized as a result.

In one possible design of the system, the receivers 110 can forward the signals measured by them directly to the central control unit 120 which can then determine whether the measured signals 210 originate from the transmitter 200. Measured signals 210 which are categorized as not originating from the transmitter 200 can be ignored for the purposes of determining the position of the transmitter 200, thereby improving the position determination.

Alternatively or additionally, the receivers 110 can be designed such that the multiplicity of receivers 110 can determine independently whether the measured signals 210 originate from the transmitter 200. In this case, the data relating to the measured signals 210 can be kept more simple, thereby reducing the required bandwidth for the communication between the receivers 110 and the central control unit 120. The receivers 110 can additionally be designed such that the data relating to the measured signals 210 are transmitted only if it has been determined that the measured signals 210 originate from the transmitter 200. Even more bandwidth can thereby be saved, and errors due to overlapping communication can be avoided.

Fig. 2 shows only one single transmitter 200, the position of which is intended to be determined. However, the positions of a plurality of transmitters can also be determined with the system 100 shown.

The multiplicity of receivers 110 can be designed as stationary and/or mobile, depending on the application.

### REFERENCE SIGN LIST

- M: Method for determining a position of a transmitter
- M1: Method step for synchronizing a multiplicity of receivers
- M2: Method step for measuring signals
- M3: Method step for forwarding data
- M4: Method step for evaluating data
- 100: System
- 110: Receiver
- 120: Central control unit
- 200: Transmitter
- 210: Signal

## Claims

1. Method (M) for determining a position of a transmitter (200), comprising:
- synchronizing (M1) a multiplicity of receivers (110) by forwarding a list of measurement parameters from a central control unit (120) to the multiplicity of receivers (110), wherein the list of measurement parameters contains a multiplicity of measurement time intervals;
- measuring (M2) signals (210) by means of the multiplicity of receivers (110) using the list of measurement parameters;
- forwarding (M3) data relating to the measured signals (210) from the multiplicity of receivers (110) to the central control unit (120), wherein the data relating to the measured signals (210) contain a measurement time and a measurement position of the measured signal (210); and
- evaluating (M4) the forwarded data in order to determine the position of the transmitter (200) by means of the central control unit (120).

2. Method (M) according to Claim 1, wherein the list of measurement parameters further contains a measurement start time, a measurement time interval length and/or a measurement duration.

3. Method (M) according to one of Claims 1 or 2, wherein the list of measurement parameters further contains a frequency measurement range.

4. Method (M) according to claim 3, wherein the frequency measurement range is divided into a multiplicity of sub-ranges and one of the multiplicity of sub-ranges is assigned to each of the multiplicity of measurement intervals.

5. Method (M) according to one of the preceding claims, wherein the data relating to the measured signals (210) contain the measured signals (210) and the central control unit (120) determines whether the measured signals (210) originate from the transmitter (200).

6. Method (M) according to one of the preceding claims, wherein the multiplicity of receivers (110) determine whether the measured signals (210) originate from the transmitter (200).

7. Method (M) according to Claim 6, wherein each of the multiplicity of receivers (110) transmits the data relating to the measured signals (210) only if it has been determined that the measured signals (210) originate from the transmitter (200).

8. Method (M) according to one of the preceding claims, wherein the positions in each case of a multiplicity of transmitters (200) are determined.

9. System (100) having a multiplicity of receivers (110) and a central control unit (120) which is designed to carry out a method (M) according to one of Claims 1 to 8.

10. System (100) according to Claim 9, wherein the multiplicity of receivers (110) are designed as stationary and/or mobile.
